# EUROPEAN PATENT SPECIFICATION

(11) **EP 2 288 499 B1**
(45) Date of publication and mention of the grant of the patent: **28.11.2012**
(21) Application number: 09770675.8
(22) Date of filing: 01.06.2009
(51) Int. Cl.: B32B 17/10, B32B 27/30, C08F 8/44, C08F 210/02, C08J 5/18, C08L 23/08, B32B 27/28

(54) **MOLDED ARTICLES COMPRISING IONOMER COMPOSITIONS**
FORMARTIKEL MIT IONOMERZUSAMMENSETZUNGEN
ARTICLES MOULÉS RENFERMANT DES COMPOSITIONS IONOMÈRES

(30) Priority: 30.05.2008 US 130382 P
(43) Date of publication of application: 02.03.2011
(73) Proprietor: E. I. du Pont de Nemours and Company, Wilmington, DE 19898 (US)
(72) Inventor: HAUSMANN, Karlheinz, CH-2012 Auvernier (CH); PESEK, Steven, C., Orange TX 77632 (US); SMITH, Charles, Anthony, Vienna WV 26105 (US)
(74) Representative: Heinemann, Monica
(86) International application number: PCT/US2009/045814
(87) International publication number: WO 2009/158140

(56) References cited:
- WO-A-98/38227
- WO-A-2006/057771
- WO-A-2007/064794
- US-A- 5 631 328
- US-A- 5 789 475

## Description

### FIELD OF THE INVENTION

The present invention relates to molded articles, in particular injection molded or compression molded articles, made from certain ionomer compositions and having improved optical properties.

### BACKGROUND OF THE INVENTION

Several patents and publications are cited in this description in order to more fully describe the state of the art to which this invention pertains.

Ionomers are copolymers produced by partially or fully neutralizing parent acid copolymers comprising copolymerized residues of α-olefins and α,β-ethylenically unsaturated carboxylic acids. A variety of articles made from ionomers by injection molding processes have been used in our daily life.

For example, golf balls with ionomer covers have been produced by injection molding. See, e.g.; U.S. Patent Nos. 4,714,253; 5,439,227; 5,452,898; 5,553,852; 5,752,889; 5,782,703; 5,782,707; 5,803,833; 5,807,192; 6,179,732; 6,699,027; 7,005,098; 7,128,864; 7,201,672; 2006/0043632; 2006/0273485; and 2007/0282069.

lonomers have also been used to produce injection molded hollow articles, such as containers. See, e.g. U.S. Patent Nos. 4,857,258; 4,937,035; 4,944,906; 5,094,921; 5,788,890; 6,207,761; and 6,866,158, U.S. Patent Publication Nos. 20020180083; 20020175136; and 20050129888, EPO Patent Nos. EP1816147 and EP0855155, and PCT Patent Publication Nos. WO2004062881; WO2008010597; and WO2003045186.

Containers produced by injection molding often have thick wall structures. When ionomers are used in forming such containers, the optical properties tend to suffer due to the thickness of the wall. There is a need, especially in the cosmetic industry, to develop a type of container that is made of ionomer compositions and that has improved optical properties.

### SUMMARY OF THE INVENTION

An injection molded or compression molded article comprises an ionomer composition and has improved optical properties. The ionomer composition comprises an ionomer that is produced by partially neutralizing a precursor acid copolymer, and the precursor acid copolymer comprises copolymerized units of an α-olefin having 2 to 10 carbons and, based on the total weight of the precursor acid copolymer, about 19.5 to about 30 wt% of copolymerized units of an α,β-ethylenically unsaturated carboxylic acid having 3 to 8 carbons.

### DETAILED DESCRIPTION OF THE INVENTION

The following definitions apply to the terms as used throughout this specification, unless otherwise limited in specific instances.

The technical and scientific terms used herein have the meanings that are commonly understood by one of ordinary skill in the art to which this invention belongs. In case of conflict, the present specification, including the definitions herein, will control.

As used herein, the terms "comprises," "comprising," "includes," "including," "containing," "characterized by," "has," "having" or any other variation thereof, refer to a non-exclusive inclusion. For example, a process, method, article, or apparatus that comprises a given list of elements is not necessarily limited to only those elements given, but may further include other elements not expressly listed or inherent to such process, method, article, or apparatus.

The transitional phrase "consisting of" excludes any element, step, or ingredient not specified in the given list of elements, closing the list to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" limits the scope of a claim to the specified materials or steps and those that do not materially affect the basic and novel characteristic(s) of the claimed invention. A 'consisting essentially of claim occupies a middle ground between closed claims that are written in a 'consisting of format and fully open claims that are drafted in a 'comprising' format. Optional additives as defined herein, at levels that are appropriate for such additives, and minor impurities are not excluded from a composition by the term "consisting essentially of".

When a composition, a process, a structure, or a portion of a composition, a process, or a structure, is described herein using an openended term such as "comprising," unless otherwise stated the description also includes an embodiment that "consists essentially of' or "consists of" the elements of the composition, the process, the structure, or the portion of the composition, the process, or the structure.

The articles "a" and "an" may be employed in connection with various elements and components of compositions, processes or structures described herein. This is merely for convenience and to give a general sense of the compositions, processes or structures. Such a description includes "one or at least one" of the elements or components. Moreover, as used herein, the singular articles also include a description of a plurality of elements or components, unless it is apparent from a specific context that the plural is excluded.

The term "or", as used herein, is inclusive; that is, the phrase "A or B" means "A, B, or both A and B". More specifically, a condition "A or B" is satisfied by any one of the following: A is true (or present) and B is false (or not present); A is false (or not present) and B is true (or present); or both A and B are true (or present). Exclusive "or" is designated herein by terms such as "either A or B" and "one of A or B", for example.

The term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

In addition, the ranges set forth herein include their endpoints unless expressly stated otherwise. Further, when an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed. The scope of the invention is not limited to the specific values recited when defining a range.

When materials, methods, or machinery are described herein with the term "known to those of skill in the art", "conventional" or a synonymous word or phrase, the term signifies that materials, methods, and machinery that are conventional at the time of filing the present application are encompassed by this description. Also encompassed are materials, methods, and machinery that are not presently conventional, but that will have become recognized in the art as suitable for a similar purpose.

Unless stated otherwise, all percentages, parts, ratios, and like amounts, are defined by weight.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 9 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such.

The term "dipolymer" refers to polymers consisting essentially of two monomers and the term "terpolymer" refers to polymers consisting essentially of three monomers.

The term "acid copolymer" refers to a polymer comprising copolymerized units of an α-olefin, an α,β-ethylenically unsaturated carboxylic acid, and optionally other suitable comonomer(s), such as an α,β-ethylenically unsaturated carboxylic acid ester.

The term "ionomer" refers to a polymer that is produced by partially or fully neutralizing the carboxylic acid groups of an acid copolymers.

The term "(meth)acrylic acid," and the abbreviation "(M)AA," refers to methacrylic acid, acrylic acid, or a combination of methacrylic acid and acrylic acid. Likewise, the terms "(meth)acrylate" and "alkyl (meth)acrylate" refer to alkyl esters of methacrylic acid, acrylic acid, or a combination of methacrylic acid and acrylic acid.

Described herein is a molded article produced from an ionomer composition. Such a molded article has improved optical properties, i.e., lower haze and higher clarity, compared to the prior art molded ionomer articles.

Although the articles provided herein may be formed by any type of molding, such as extrusion molding, blow molding, compression molding or injection molding, the articles are described for the most part in terms of injection molding. Because ionomer compositions are typically thermoplastic materials, it is believed that injection molding will be the most commonly used process for forming the articles.

The ionomer composition used in the injection molded article comprises an ionomer whose precursor acid copolymer comprises copolymerized units of an α-olefin having 2 to 10 carbons and, based on the total weight of the acid copolymer, about 19.5 to about 30 wt%, preferably about 20 to about 25 wt%, or more preferably about 21 to about 23 wt% of copolymerized units of an α, β-ethylenically unsaturated carboxylic acid having 3 to 8 carbons.

Suitable α-olefin comonomers include, but are not limited to, ethylene, propylene, 1-butene, 1-pentene, 1-hexene, 1-heptene, 3 methyl-1-butene, 4-methyl-1-pentene, and the like and mixtures of two or more thereof. Preferably, the α-olefin is ethylene.

Suitable α.β-ethylenically unsaturated carboxylic acid comonomers include, but are not limited to, acrylic acid, methacrylic acid, itaconic acid, maleic acid, maleic anhydride, fumaric acid, monomethyl maleic acid, and mixtures of two or more thereof. Preferably, the α,β-ethylenically unsaturated carboxylic acid is (meth)acrylic acid.

The precursor acid copolymer may further comprise copolymerized units of one or more other comonomer(s), such as unsaturated carboxylic acids having 2 to 10 carbons, or preferably 3 to 8 carbons, or derivatives thereof. Suitable acid derivatives include acid anhydrides, amides, and esters. Esters are preferred. Specific examples of preferred esters of unsaturated carboxylic acids include, but are not limited to, methyl acrylates, methyl methacrylates, ethyl acrylates, ethyl methacrylates, propyl acrylates, propyl methacrylates, isopropyl acrylates, isopropyl methacrylates, butyl acrylates, butyl methacrylates, isobutyl acrylates, isobutyl methacrylate, tert-butyl acrylates, tert-butyl methacrylates, octyl acrylates, octyl methacrylates, undecyl acrylates, undecyl methacrylates, octadecyl acrylates, octadecyl methacrylates, dodecyl acrylates, dodecyl methacrylates, 2-ethylhexyl acrylates, 2-ethylhexyl methacrylates, isobornyl acrylates, isobornyl methacrylates, lauryl acrylates, lauryl methacrylates, 2-hydroxyethyl acrylates, 2-hydroxyethyl methacrylates, glycidyl acrylates, glycidyl methacrylates, poly(ethylene glycol)acrylates, poly(ethylene glycol)methacrylates, poly(ethylene glycol) methyl ether acrylates, poly(ethylene glycol) methyl ether methacrylates, poly(ethylene glycol) behenyl ether acrylates, poly(ethylene glycol) behenyl ether methacrylates, poly(ethylene glycol) 4-nonylphenyl ether acrylates, poly(ethylene glycol) 4-nonylphenyl ether methacrylates, poly(ethylene glycol) phenyl ether acrylates, poly(ethylene glycol) phenyl ether methacrylates, dimethyl maleates, diethyl maleates, dibutyl maleates, dimethyl fumarates, diethyl fumarates, dibutyl fumarates, dimethyl fumarates, vinyl acetates, vinyl propionates, and mixtures of two or more thereof. Examples of preferable suitable comonomers include, but are not limited to, methyl acrylates, methyl methacrylates, butyl acrylates, butyl methacrylates, glycidyl methacrylates, vinyl acetates, and mixtures of two or more thereof.

The precursor acid copolymer may be synthesized as described in U.S. Patent Nos. 3,404,134; 5,028,674; 6,500,888; and 6,518,365. Some suitable precursor acid copolymers may also be available from E.I. du Pont de Nemours & Co. of Wilmington, DE (hereinafter "DuPont") under the Nucrel® trademark.

Suitable precursor acid copolymers have a melt flow rate (MFR or MI) of 400 g/10 min or less, 350 g/10 min or less, 300 g/10 min or less, 250 g/10 min or less, 150 g/10 min or less, 100 g/10 min or less, 60 g/10 min or less, or more preferably 45 g/10 min or less, or still more preferably 30 g/10 min or less, or still more preferably 25 g/10 min or less, as determined by ASTM D-1238 at 190°C and 2.16 kg. Without being held to theory, it is believed that due to the low MFR of the precursor acid copolymer, injection molded articles formed of ionomers derived therefrom will possess sufficient toughness and therefore have a reduced tendency to break, crack, or chip.

To produce the ionomer used in the ionomer composition, the carboxylic acid groups in the precursor acid copolymer are neutralized to form carboxylate anions. Preferably, about 5% to about 90%, or preferably about 10% to about 50%, or more preferably about 20% to about 50%, or still more preferably about 20% to about 35% of the carboxylic acid groups are neutralized, based on the total carboxylic acid content of the precursor acid copolymer prior to the neutralization.

The ionomer further comprises, as counterions to the carboxylate groups, one or more cations. Preferably, the cations are metal ions. The metal ions may be monovalent, divalent, trivalent, multivalent, or a combination of ions of different valencies. Useful monovalent metal ions include but are not limited to ions of sodium, potassium, lithium, silver, mercury, copper, and the like, and mixtures of two or more thereof. Useful divalent metal ions include but are not limited to ions of beryllium, magnesium, calcium, strontium, barium, copper, cadmium, mercury, tin, lead, iron, cobalt, nickel, zinc, and the like, and mixtures of two or more thereof. Useful trivalent metal ions include but are not limited to ions of aluminum, scandium, iron, yttrium, and the like, and mixtures of two or more thereof. Useful multivalent metal ions include but are not limited to ions of titanium, zirconium, hafnium, vanadium, tantalum, tungsten, chromium, cerium, iron, and the like, and mixtures of two or more thereof. It is noted that when the metal ion is multivalent, complexing agents such as stearate, oleate, salicylate, and phenolate radicals may be included, as described in U.S. Patent No. 3,404,134. The metal ions are preferably monovalent or divalent. More preferably, the metal ions are selected from the group consisting of sodium, lithium, magnesium, zinc, potassium and mixtures of two or more thereof. Yet more preferably, the metallic ions are sodium, zinc, or sodium and zinc. Sodium ions are particularly preferred. The precursor acid copolymers may be neutralized by procedures described in U.S. Patent No. 3,404,134.

Suitable ionomers have a MFR of about 25 g/10 min or less, about 20 g/10 min or less, or more preferably about 15 g/10 min or less, or yet more preferably about 10 g/10 min or less, or still more preferably about 5 g/10 min or less, as determined by ASTM D-1238 at 190°C and 2.16 kg. Some preferred ionomers have a melt index in the range of 10 to 20 g/10 min.

The ionomer composition may further comprise one or more suitable additive(s). Suitable additives include, but are not limited to, plasticizers, processing aides, flow enhancing additives, flow reducing additives (e.g., organic peroxides), lubricants, pigments, dyes, optical brighteners, flame retardants, impact modifiers, nucleating agents, antiblocking agents (e.g., silica), thermal stabilizers, hindered amine light stabilizers (HALS), UV absorbers, UV stabilizers, dispersants, surfactants, chelating agents, coupling agents, adhesives, primers, reinforcement additives (e.g., glass fiber), fillers, and the like, and combinations of two or more additives. Suitable levels of these additives and methods of incorporating these additives into polymer compositions will be known to those of skill in the art. See, e.g., the Modern Plastics Encyclopedia, McGraw-Hill (New York, NY, 1995).

Three preferred additives include thermal stabilizers, UV absorbers, and hindered amine light stabilizers. Thermal stabilizers have been described in the art. Preferred general classes of thermal stabilizers include, but are not limited to, phenolic antioxidants, alkylated monophenols, alkylthiomethylphenols, hydroquinones, alkylated hydroquinones, tocopherols, hydroxylated thiodiphenyl ethers, alkylidenebisphenols, O-, N- and S-benzyl compounds, hydroxybenzylated malonates, aromatic hydroxybenzyl compounds, triazine compounds, aminic antioxidants, aryl amines, diaryl amines, polyaryl amines, acylaminophenols, oxamides, metal deactivators, phosphites, phosphonites, benzylphosphonates, ascorbic acid (vitamin C), compounds that destroy peroxide, hydroxylamines, nitrones, thiosynergists, benzofuranones, indolinones, and the like and mixtures thereof. The ionomer compositions may contain any effective amount of thermal stabilizer(s). Use of thermal stabilizer(s) is optional and in some instances is not preferred. When thermal stabilizer(s) are used, they may be present in the ionomer compositions at a level of at least about 0.05 wt%, and up to about 10 wt%, more preferably up to about 5 wt%, and still more preferably up to about 1 wt%, based on the total weight of the ionomer composition.

UV absorbers have also been described in the art. Preferred general classes of UV absorbers include, but are not limited to, benzotriazoles, hydroxybenzophenones, hydroxyphenyl triazines, esters of substituted and unsubstituted benzoic acids, and the like and mixtures thereof. The ionomer compositions may contain any effective amount of UV absorber(s). Use of an UV absorber is optional and in some instances is not preferred. When UV absorber(s) are used, they may be present in the ionomer compositions at a level of at least about 0.05 wt%, and up about 10 wt%, more preferably up to about 5 wt%, and still more preferably up to about 1 wt%, based on the total weight of the ionomer composition.

Hindered amine light stabilizers have also been described in the art. Generally, hindered amine light stabilizers are secondary or tertiary, acetylated, N hydrocarbyloxy substituted, hydroxy substituted N-hydrocarbyloxy substituted, or other substituted cyclic amines which further incorporate steric hindrance, generally derived from aliphatic substitution on the carbon atoms adjacent to the amine function. The ionomer compositions may contain any effective amount of hindered amine light stabilizer(s). Use of a hindered amine light stabilizer is optional and in some instances is not preferred. When hindered amine light stabilizer(s) are used, they may be present in the ionomer compositions at a level of at least about 0.05 wt%, and up to about 10 wt%, more preferably up to about 5 wt%, and still more preferably, up to about 1 wt%, based on the total weight of the ionomer composition.

The injection molded articles have a minimum thickness of at least about 3 mm. It follows that their maximum thickness is then greater than 3 mm. Preferably, the injection molded article has a substantially uniform thickness, that is, preferably the minimum thickness and the maximum thickness are in the range of about 3 to about 100 mm, more preferably about 3 to about 50 mm, or still more preferably about 5 to about 35 mm.

In this connection, the term "thickness" as used herein refers to the length of an object in its smallest dimension. For example, when the object is a container, the "thickness" is typically the length measured through the wall of the container in a direction that is perpendicular to the wall. More particularly, if the article is a cylinder with a height of 10 cm, concentric inner and outer circumferences, an inner diameter of 9 cm and an outer diameter of 10 cm, then the thickness of the article is 0.5 cm. If a container is made by combining this cylinder with a bottom that is a disk having a diameter of 10 cm and a thickness of 1.0 cm, then the minimum thickness of the container is 0.5 cm and its maximum thickness is 1.0 cm or possibly slightly greater than 1.0 cm in the corner where the cylinder meets the container bottom.

As is noted above, any suitable molding process may be used to form the molded articles described herein. Injection molding is a preferred molding process. The molded articles described herein may preferably be produced by any suitable injection molding process. Suitable injection molding processes include co-injection molding and over-molding. These processes are also referred to as two-shot or multi-shot molding processes.

Injection molding equipment and processes are described generally in the Modern Plastics Encyclopedia and in the Kirk-Othmer Encyclopedia of Chemical Technology (5th Edition), Wiley-Interscience (Hoboken, NJ, 2006). In addition to this information, some manufacturers of injection molding equipment also provide instruction in injection molding techniques. With these resources at hand, one skilled in the art is able to determine the proper molding conditions required to produce a particular type of article from a given ionomer composition.

In general, however, an injection molding process may comprise the steps of:
melting the ionomer composition;
forming the injection molded article by flowing the molten ionomer composition into a mold;
cooling the injection molded article in the mold until it will hold its shape;
releasing the injection molded article from the mold; and
cooling the injection molded article to room temperature ((22 + 3)°C) or to a lower temperature.

As those of skill in the art are aware, injection molded articles, when removed from their molds, must have sufficient stability to hold their shape when subjected without mechanical support to the force of gravity. In addition, articles such as those described herein, having a minimum thickness of 3mm, may not have a uniform temperature throughout their bulk. Rather, the temperature of the surface of the newly unmolded article will be approximately equal to that of the mold, and its internal temperature will be significantly higher. In fact, the surface of the object may have a temperature that is below the solidification temperature of the ionomer composition, and the core of the article may have a temperature that is above the solidification temperature.

Moreover, although the temperature external to the article may be controlled so that the environment is cooled at a particular rate, the rate at which the article actually cools, both in its interior and at its surface, is limited by the rate of heat transfer through the article and from the article's surface to its surroundings (typically air or quench bath). Consequently, the cooling rate of the articles described herein may not be uniform. The rate may be different at the article's surface than it is at the article's core, and the rate may vary continuously or discontinuously. For example, it may decrease with time approximately as an exponential function, when the temperature of the heat sink or environment is held approximately constant. The principles of heat transfer that govern the cooling of the articles are well understood and are summarized in references such as Holman, J., Heat Transfer, McGraw-Hill (New York, 2009).

More specifically, however, the ionomer composition is generally molded (flowed into the mold) at a melt temperature of about 120°C to about 250°C, or preferably about 130°C to about 210°C. In general, slow to moderate fill rates with pressures of about 69 to about 110 MPa are used. The mold temperatures may be in the range of about 5°C to about 50°C. The injection molded article is cooled in the mold until it is self-supporting, as described above. Its surface temperature may be in the range of the temperature of the mold to a temperature that is below the solidification temperature of the ionomer composition when it is released from the mold. The bulk or average temperature of the article may be about 70°C to about 80°C. The temperature in the interior of the article may range from the temperature of the mold to temperatures above the melting temperature of the ionomer composition. Indeed, the interior temperature of the newly ejected article may be close to the temperature of the ionomer composition melt that was flowed into the mold. Finally, the injection molded article is cooled to room temperature, with or without quenching, at a rate of about 2.0°C/min, 1.5°C/min, 1.0°C/min, 0.7°C/min, 0.5°C/min, 0.3°C/min, 0.2°C/min, 0: 1 °C/min or less, or at a rate that varies continuously or discontinuously between 2.0°C/min and 0.1 °C/min. These cooling rates may refer to the temperature of the environment or heat sink, as in the example of a programmable oven or a temperature-controlled bath. Alternatively, they may refer to the bulk (average) temperature or core temperature of the article. Clearly, the article's surface may cool at much higher rates than these, for example up to about 50°C/min in the case of a molded article ejected from a mold into an ice water bath.

The ionomer compositions described above surprisingly provide molded articles with improved toughness and optical properties. The improvement in optical properties is distinctly evidenced when the articles are subjected to lower cooling rates. During the final steps of a molding process, for example, the molded article is ejected from the mold. The article may then be quenched, for example in a cool water bath. Because of the relatively lower temperature of the water and the relatively good heat transfer properties of water, quenched articles are expected to cool to room temperature over a relatively shorter time. Quenching requires additional equipment and a more elaborate manufacturing procedure, however.

Alternatively, the newly ejected article may be placed on a cooling station (such as a cart or a tabletop in the manufacturing facility) to cool to room temperature (22±3°C). In practice, as several of the hot, newly unmolded articles may be placed on the cooling station, the temperature of the air immediately surrounding the cooling station may be significantly higher than room temperature. Because of the relatively higher temperature and the relatively poor heat transfer properties of air, these articles are expected to cool to room temperature over a relatively longer time. Consequently, an improvement in optical properties under slow cooling rates is a desirable attribute of molded articles.

In this connection, it is known that polyethylene and polymers comprising a significant amount of copolymerized ethylene tend to crystallize upon cooling from the melt, and that lower cooling rates favor the formation of more and larger crystals. Crystals above a certain size will contribute to a hazy appearance or a lack of clarity in polyethylenes and ethylene copolymers, even if the crystals are too small to be visible to the unaided eye. Without wishing to be held to any theory, it is postulated that the ionomer compositions described herein have a lower level of crystallinity, crystal mass or crystal size, such that the molded articles have superior optical properties even when they are cooled under conditions that favor crystallization.

In particular, the ionomer compositions described herein have a haze ranging from 0.7 to 13.5, 1.0 to 12.0, 2.0 to 10.0, 3.0 to 9.0, or 4.0 to 8.0, when measured according to ASTM D1003 using a Haze-gard Plus hazemeter (BYK-Gardner, Columbia, MD) on a test plaque having a thickness of 3.0 mm, said test plaque made by melting the ionomer composition, forming the molten ionomer composition into the test plaque, and cooling the molten ionomer composition to a temperature of (22 ± 3)°C or less at a rate of 0.1 °C/min or less.

The improvements in clarity may be measured quantitatively, for example using the Haze-gard Plus hazemeter. Alternatively, the improvements may be observed with the unaided eye and reported semi-quantitatively (e.g., compared to a set of standards of known clarity), qualitatively or in a relative ranking.

The molded article may have any form. For example, the molded article may be in the form of a multi-layer structure (such as an over-molded article), wherein at least one layer of the multi-layer structure consists essentially of the ionomer composition described above and has a minimum thickness of at least about 3 mm. Preferably, the ionomer layer of the multi-layer article has a thickness of about 3 to about 100 mm, more preferably about 3 to about 50 mm, or yet more preferably about 5 to about 35 mm.

Also alternatively, the injection molded article described herein may have the form of a sheet, a container (e.g., a bottle or a bowl), a cap or stopper (e.g. for a container or a perfume bottle), a tray, a medical device or instrument (e.g., an automated or portable defibrillator unit), a handle, a knob, a push button, a decorative article, a panel, a console box, or a footwear component (e.g., a heel counter, a toe puff, or a sole).

The article may be an intermediate article for use in further shaping processes. For example, the injection molded article may be a pre-form or a parison suitable for use in a blow molding process. Blow-molding processes are often used to form containers (e.g., bottles or cosmetic containers). The injection molded intermediate article may be in the form of a multi-layer structure. Thus, the container produced will also have a multi-layer wall structure.

Some preferred articles include a sheet, a container, a cap or stopper, a tray, a medical device or instrument, a handle, a knob, a push button, a decorative article, a panel, a console box, or a footwear component.

Also preferred are those articles that are in the form of a multi-layer structure, in which at least one layer consists essentially of the ionomer composition and has a minimum thickness of at least about 3 mm.

The improved optical properties under slower cooling rates afforded by the articles described herein are particularly desirable for containers and container caps. Cosmetic containers and cosmetic container caps, such as perfume caps, are particularly preferred. Further preferred are containers and cosmetics containers in which the container wall is in a multi-layer structure having at least one layer that consists essentially of the ionomer composition, and still more preferably the at least one layer that consists essentially of the ionomer composition has a minimum thickness of at least about 3 mm.

When the article is produced by an over-molding process, the ionomer composition may be used as the substrate material, the over-mold material or both. An overmolded structure may be useful when the superior clarity and shine afforded by the ionomer composition are desired in a surface layer. For example, when an over-molding process is used, the ionomer composition described herein may be over-molded on a glass or metal container. Alternatively, the ionomer compositions may be over-molded on other articles (such as house items, medical devices or instruments, electronic devices, automobile parts, architectural structures, sporting goods, etc.) to form a soft touch and/or protective overcoat.

The following examples are provided to describe the invention in further detail. These examples, which set forth a preferred mode presently contemplated for carrying out the invention, are intended to illustrate and not to limit the invention.

### EXAMPLES

### Material and Methods

### Melt Flow Rates

The melt flow rates (MFR or MI) were measured according to ASTM Standard No. D-1238, at 190°C and under a weight of 2.16 kg.

### Injection Molding

Injection molded rectangular test bars with the dimensions of 125x75x3 mm (thin test bars) and 125x45x20 mm (thick test bars) were made by feeding the ionomer resins into a Model 150-6 HPM injection molding machine (available from Taylor's Industrial Services of Mount Gilead, OH). The ionomer melt temperature was in the range of 130°C to 200°C and the mold was maintained at a temperature of about 10°C. The mold cycle time was approximately 90 seconds. Both the thin and thick test bars were obtained by ejecting the molded bars from the mold and cooling them under ambient conditions to room temperature (about 22+3°C). For the thick test bars, the "air cooled" cooling rate was estimated to be about 0.3°C/min in the first hour after unmolding, and the rate was estimated to approach about 0.1°C/min at longer times.

After the haze level was measured, the "air cooled" thin test bars were re-heated in an air oven (at a temperature of 125°C) for 90 min and then cooled at a rate of 0.1°C/min to room temperature to produce the "slow cooled" test bars.

### Haze Measurements

Using a HunterLab ColorQuest XE haze meter (Hunter Associates Laboratory, Inc., Reston, VA), the haze level of the "air cooled" and "slow cooled" thin test bars was measured through their 3 mm thick dimension in accordance with ASTM D1003-07.

### Clarity Measurements

The clarity of the thick test bars was determined by visual inspection. The bars were ranked on a relative scale from 1 (highest clarity) to 3 (lowest clarity).

### Stress Crack Testing of Injection Molded parts

lonomers were injection molded into long bars (180 mm x 27 mm x 2 mm) parts on an NETSTAL 1 Synergy 1750H-460 molding apparatus. The polymer melt temperature ranged from 130 to 200°C. The mold temperature was maintained at approximately 20°C, and the cycle time was approximately 40 seconds. The test bars were cooled at room temperature at a rate of approximately 10°C/min.

The molded bars were folded in half (180°) and placed in a sample holder at 23°C. Two levels of stress were applied. The stress level was designated "medium" when the distance between the two ends of the folded test bar was maintained at 45 mm. The stress level was designated "high" when the two ends of the folded test bar touched and a separation of 5 mm was maintained 10 mm from the top of the fold.

One spray of Joop!™ Femme Eau de Toilette, available from Joop! GmbH of Hamburg, Germany, was applied to the folded area of the test bars. After 2 to 3 minutes, the samples were evaluated visually for cracks.

### Ionomer Resins

- ION A was a copolymer of ethylene and methacrylic acid containing 15 wt% of copolymerized residues of methacrylic acid. ION A was neutralized to a level of 56% with a source of sodium ions and had a MFR of 0.9 g/10 min. The MFR of the precursor acid copolymer was 60 g/10 min.
- ION B was a copolymer of ethylene and methacrylic acid containing 19 wt% of copolymerized residues of methacrylic acid. ION B was neutralized to a level of 37% with a source of sodium ions and had a MFR of 2.6 g/10 min. The MFR of the precursor acid copolymer was 60 g/10 min.
- ION C was a copolymer of ethylene and methacrylic acid containing 21.7 wt% of copolymerized residues of methacrylic acid. ION C was neutralized to a level of 25% with a source of sodium ions and had a MFR of 1.8 g/10 min. The MFR of the precursor acid copolymer was 23 g/10 minutes.

### Comparative Examples CE1-2 and Examples E1

Thin and thick injection molded test bars were made from the ionomers listed above, by the molding processes described above. The haze and clarity of these test bars were determined as described above and the results are reported in Table 1.

These results demonstrate that the test bars of Example E1 exhibit higher clarity and lower haze, especially under a slow cooling rate, compared to the test bars of Comparative Examples CE1 and CE2. Moreover, the high acid ionomer also demonstrated better resistance to cracking under high stress conditions.

**TABLE 1**

| **Sample** | **Ionomer** | **Haze (%)** | | **Stress Cracking** | | **Clarity** |
|---|---|---|---|---|---|---|
| | | **"Air Cooled"** | **"Slow Cooled"** | **Medium Stress** | **High Stress** | |
| CE1 | ION A | 4.3 | 52.6 | n/a | cracked into two pieces | 3 |
| CE2 | ION B | 1.7 | 13.5 | no cracks | large cracks | 2 |
| E1 | ION C* | 3 | 6.7 | no cracks | no cracks | 1 |

| | | | | | | |
|---|---|---|---|---|---|---|
| *Note: In the stress cracking tests, the ionomers used as "ION C" had an acid level of 21 to 23%, and the melt index of the precursor acid copolymers was up to 245 g/10 min. The cation was sodium, and the neutralization level or ionomer melt index were approximately equal to those of ION C as defined above. | | | | | | |

While certain of the preferred embodiments of the present invention have been described and specifically exemplified above, it is not intended that the invention be limited to such embodiments.

## Claims

1. A molded article comprising an ionomer composition; said molded article having a minimum thickness of 3.0 mm or greater;
wherein the ionomer composition comprises an ionomer that is produced by partially neutralizing a precursor acid copolymer, and wherein the precursor acid copolymer comprises copolymerized units of an α-olefin having 2 to 10 carbons and, based on the total weight of the precursor acid copolymer, about 19.5 to about 30 wt% of copolymerized units of an α,β-ethylenically unsaturated carboxylic acid having 3 to 8 carbons;
wherein the precursor acid copolymer has a melt flow rate (MFR) of about 350 g/10 min or less, as determined in accordance with ASTM D-1238 at 190°C and under a weight of 2.16 kg;
wherein about 5% to about 90% of the total carboxylic acid content of the precursor acid copolymer is neutralized;
wherein the ionomer has a MFR of about 25 g/10 min or less, as determined in accordance with ASTM D-1238 at 190°C and under a weight of 2.16 kg; and
wherein the haze of the ionomer composition is between 0.7 to 13.5, when measured according to ASTM-1003 ASTM D1003 on a test plaque having a thickness of 3.0 mm, said test plaque made by melting the ionomer composition, forming the molten ionomer composition into the test plaque, and cooling the molten ionomer composition to a temperature of (22 ± 3)°C or less at a rate of 0.1°C/min or less.

2. The molded article of claim 1, wherein the ionomer comprises at least one metal cation selected from the group consisting of ions of sodium, lithium, magnesium, zinc, potassium, and combinations of two or more of these ions; or wherein the precursor acid copolymer comprises about 20 to about 25 wt% of copolymerized units of the α,β-ethylenically unsaturated carboxylic acid having 3 to 8 carbons; or wherein the precursor acid copolymer has a MFR of about 60 g/10 min or less and the ionomer has a MFR of about 5 g/10 min or less, as determined in accordance with ASTM D-1238 at 190°C and under a weight of 2.16 kg; or wherein about 20% to about 50% of the total carboxylic acid content of the precursor acid copolymer is neutralized.

3. The molded article of claim 1 or claim 2, wherein about 20% to about 35% of the total carboxylic acid content of the precursor acid copolymer is neutralized and the metal ions consist essentially of sodium cations.

4. The molded article of any of claims 1 to 3, consisting essentially of the ionomer composition and having a minimum thickness and a maximum thickness in the range of about 3 to about 100 mm.

5. The molded article of any of claims 1 to 4, which is in the form of a multi-layer structure, at least one layer of said multi-layer structure consisting essentially of the ionomer composition.

6. The molded article of any of claims 1 to 5, which is a sheet, a container, a cap or stopper, a tray, a medical device or instrument, a handle, a knob, a push button, a decorative article, a panel, a console box, or a footwear component.

7. The molded article of any of claims 1 to 6, which is a cosmetic container.

8. The molded article of claim 7, wherein the container has a multi-layer structure comprising at least one layer that consists essentially of the ionomer composition.

9. The molded article of claim 8, wherein the one or more layers that consist essentially of the ionomer composition have a minimum thickness of at least about 3 mm.

10. The molded article of any of claims 1 to 9, which is produced by a process selected from the group consisting of extrusion molding, blow molding, compression molding and injection molding.

11. The molded article of any of claims 1 to 10, which is produced by a process selected from the group consisting of co-injection molding and over-molding.

## Patentansprüche

1. Formartikel umfassend eine Ionomerzusammensetzung; wobei der Formartikel eine Mindestdicke von 3,0 mm oder mehr aufweist;
wobei die Ionomerzusammensetzung ein Ionomer umfasst, das durch teilweises Neutralisieren eines sauren Vorläufercopolymers hergestellt wird, und wobei das saure Vorläufercopolymer copolymerisierte Einheiten eines α-Olefins, das 2 bis 10 Kohlenstoffatome aufweist, und etwa 19,5 bis etwa 30 Gew.-%, auf das Gesamtgewicht des sauren Vorläufercopolymers bezogen, copolymerisierte Einheiten einer α,β-ethylenisch ungesättigten Carbonsäure, die 3 bis 8 Kohlenstoffe aufweist, umfasst;
wobei das saure Vorläufercopolymer eine Schmelzflussrate (MFR) von etwa 350 g/10 min oder weniger, wie ASTM D-1238 gemäß bei 190 °C und unter einem Gewicht von 2,16 kg bestimmt, aufweist;
wobei etwa 5 % bis etwa 90 % des gesamten Carbonsäuregehalts des sauren Vorläufercopolymers neutralisiert werden;
wobei das Ionomer eine MFR von etwa 25 g/10 min oder weniger, wie ASTM D-1238 gemäß bei 190 °C und unter einem Gewicht von 2,16 kg bestimmt, aufweist und
wobei die Trübe der Ionomerzusammensetzung zwischen 0,7 und 13,5, ASTM-1003 ASTM D1003 gemäß auf einer Testplatte einer Dicke von 3,0 mm gemessen, beträgt, wobei die Testplatte durch Schmelzen der Ionomerzusammensetzung, Formen der geschmolzenen Ionomerzusammensetzung zu einer Testplatte und Kühlen der geschmolzenen Ionomerzusammensetzung auf eine Temperatur von (22 ± 3) °C oder weniger mit einer Rate von 0,1 °C/min oder weniger hergestellt wird.

2. Formartikel nach Anspruch 1, wobei das Ionomer mindestens ein Metallkation umfasst ausgewählt aus der Gruppe bestehend aus Ionen von Natrium, Lithium, Magnesium, Zink, Kalium und Kombinationen von zwei oder mehreren dieser Ionen; oder wobei das saure Vorläufercopolymer etwa 20 bis etwa 25 Gew.-% copolymerisierte Einheiten der α,β-ethylenisch ungesättigten Carbonsäure, die 3 bis 8 Kohlenstoffe aufweist, umfasst;
oder wobei das saure Vorläufercopolymer eine MFR von etwa 60 g/10 min oder weniger aufweist und das Ionomer eine MFR von etwa 5 g/10 min oder weniger, wie ASTM D-1238 gemäß bei 190 °C und unter einem Gewicht von 2,16 kg bestimmt, aufweist; oder wobei etwa 20 % bis etwa 50 % des gesamten Carbonsäuregehalts des sauren Vorläufercopolymers neutralisiert werden.

3. Formartikel nach Anspruch 1 oder Anspruch 2, wobei etwa 20 % bis etwa 35 % des gesamten Carbonsäuregehalts des sauren Vorläufercopolymers neutralisiert werden und die Metallionen im Wesentlichen aus Natriumkationen bestehen.

4. Formartikel nach einem der Ansprüche 1 bis 3, der im Wesentlichen aus der Ionomerzusammensetzung besteht und eine Mindestdicke und eine Höchstdicke im Bereich von etwa 3 bis etwa 100 nm aufweist.

5. Formartikel nach einem der Ansprüche 1 bis 4, der in Form eines Mehrschichtgefüges vorliegt, wobei mindestens eine Schicht des Mehrschichtgefüges im Wesentlichen aus der Ionomerzusammensetzung besteht.

6. Formartikel nach einem der Ansprüche 1 bis 5, der eine Platte, ein Behälter, eine Kappe oder ein Stöpsel, eine Schale, eine medizinische Vorrichtung oder ein medizinisches Instrument, ein Griff, ein Knauf, eine Drucktaste, ein dekorativer Artikel, ein Paneel, ein Konsolenkasten oder ein Fußbekleidungsteil ist.

7. Formartikel nach einem der Ansprüche 1 bis 6, der ein Behälter für Kosmetika ist.

8. Formartikel nach Anspruch 7, wobei der Behälter ein Mehrschichtgefüge aufweist, das mindestens eine Schicht umfasst, die im Wesentlichen aus der Ionomerzusammensetzung besteht.

9. Formartikel nach Anspruch 8, wobei die eine oder mehreren Schichten, die im Wesentlichen aus der Ionomerzusammensetzung bestehen, eine Mindestdicke von mindestens etwa 3 mm aufweisen.

10. Formartikel nach einem der Ansprüche 1 bis 9, der durch ein Verfahren hergestellt wird ausgewählt aus der Gruppe bestehend aus Strangpressen, Blasformen, Formpressen und Spritzgießen.

11. Formartikel nach einem der Ansprüche 1 bis 10, der durch ein Verfahren hergestellt wird ausgewählt aus der Gruppe bestehend aus Coinjektionsformen und Umspritzen.

## Revendications

1. Article moulé comprenant une composition ionomère; ledit article moulé ayant une épaisseur minimale de 3,0 mm ou supérieure; dans lequel la composition ionomère comprend un ionomère qui est produit en neutralisant partiellement un copolymère acide précurseur, et dans lequel le copolymère acide précurseur comprend des motifs copolymérisés d'une α-oléfine ayant 2 à 10 atomes de carbone et, sur la base du poids total du copolymère acide précurseur, environ 19,5 à environ 30 % en pds de motifs copolymérisés d'un acide carboxylique α,β-éthyléniquement insaturé ayant 3 à 8 atomes de carbone;
dans lequel le copolymère acide précurseur a une vitesse d'écoulement à l'état fondu (MFR) d'environ 350 g/10 min ou moins, telle que déterminée conformément à la norme ASTM D-1238 à 190°C et sous un poids de 2,16 kg;
dans lequel environ 5 % à environ 90 % de la teneur totale en acide carboxylique du copolymère acide carboxylique est neutralisé;
dans lequel le ionomère a un MFR d'environ 25 g/10 min ou moins, tel que déterminé conformément à la norme ASTM D-1238 à 190°C et sous un poids de 2,16 kg; et
dans lequel le trouble de la composition ionomère est compris entre 0,7 à 13,5, lorsque mesuré selon la norme ASTM-1003 ASTM D1003 sur une plaque de test ayant une épaisseur de 3,0 mm, ladite plaque de test étant fabriquée en faisant fondre la composition ionomère, en mettant en forme la composition ionomère fondue dans la plaque de test, et en refroidissant la composition ionomère fondue à une température de (22 ± 3)°C ou moins à une vitesse de 0,1 °C/min ou moins.

2. Article moulé selon la revendication 1, dans lequel le ionomère comprend au moins un cation métallique sélectionné parmi le groupe constitué des ions de sodium, lithium, magnésium, zinc, potassium, et des combinaisons de deux ou plusieurs des ces ions; ou dans lequel le copolymère acide précurseur comprend environ 20 à environ 25 % en pds de motifs copolymérisés d'acide carboxylique α,β-éthyléniquement insaturé ayant 3 à 8 atomes de carbone; ou dans lequel le copolymère acide précurseur a un MFR d'environ 60 g/10 min ou moins et le ionomère a un MFR d'environ 5 g/10 min ou moins, tel que déterminé selon la norme ASTM D-1238 à 190°C et sous un poids de 2,16 kg; ou dans lequel environ 20 % à environ 50 % de la teneur totale en acide carboxylique du copolymère acide précurseur est neutralisé.

3. Article moulé selon la revendication 1 ou la revendication 2, dans lequel environ 20 % à environ 35 % de la teneur totale en acide carboxylique du copolymère acide précurseur est neutralisé et les ions métalliques sont essentiellement constitués de cations de sodium.

4. Article moulé selon l'une quelconque des revendications 1 à 3, consistant essentiellement en la composition ionomère et ayant une épaisseur minimale et une épaisseur maximale situées dans la plage d'environ 3 à environ 100 mm.

5. Article moulé selon l'une quelconque des revendications 1 à 4, qui se présente sous la forme d'une structure multicouche, au moins une couche de ladite structure multicouche consistant essentiellement en la composition ionomère.

6. Article moulé selon l'une quelconque des revendications 1 à 5, qui est une feuille, un récipient, un bouchon ou un obturateur, un plateau, un dispositif ou un instrument médical, une poignée, un bouton, un bouton poussoir, un article décoratif, un panneau, une boîte de type console, ou un composant de chaussure.

7. Article moulé selon l'une quelconque des revendications 1 à 6, qui est un récipient pour produits cosmétiques.

8. Article moulé selon la revendication 7, dans lequel le récipient a une structure multicouche comprenant au moins une couche qui est constituée essentiellement de la composition ionomère.

9. Article moulé selon la revendication 8, dans lequel la une ou plusieurs couche(s) qui est(sont) essentiellement constituée(s) de la composition ionomère a(ont) une épaisseur minimale d'au moins environ 3 mm.

10. Article moulé selon l'une quelconque des revendications 1 à 9, qui est produit à l'aide d'un procédé sélectionné parmi le groupe constitué du moulage par extrusion, du moulage par soufflage, du moulage par compression et du moulage par injection.

11. Article moulé selon l'une quelconque des revendications 1 à 10, qui est produit par un procédé sélectionné parmi le groupe constitué du moulage par co-injection et du surmoulage.
